# EUROPÄISCHE PATENTSCHRIFT

(11) **EP 2 655 909 B1**
(45) Veröffentlichungstag und Bekanntmachung des Hinweises auf die Patenterteilung: **21.01.2015**
(21) Anmeldenummer: 11773693.4
(22) Anmeldetag: 20.10.2011
(51) Int. Cl.: F16C 33/66, F16C 29/08, F16C 29/06

(54) **FÜHRUNGSWAGEN MIT SCHMIER- UND BYPASSKANAL**
GUIDE CARRIAGE COMPRISING LUBRICATING AND BYPASS CHANNELS
CHARIOT DE GUIDAGE PRÉSENTANT UN CONDUIT DE LUBRIFICATION ET UN CONDUIT DE DÉRIVATION

(30) Priorität: 28.10.2010 DE 102010049943
(43) Veröffentlichungstag der Anmeldung: 30.10.2013
(73) Patentinhaber: Robert Bosch GmbH, 70469 Stuttgart (DE)
(72) Erfinder: SCHUPIES, Andreas, 97469 Gochsheim (DE); DORN, Stefan, 97450 Arnstein (DE); SIEBENSCHUCK, Achim, 97633 Hoechheim (DE); HOFSTAETTER, Markus, 97762 Hammelburg (DE)
(74) Vertreter: Maiß, Harald
(86) Internationale Anmeldenummer: PCT/EP2011/005300
(87) Internationale Veröffentlichungsnummer: WO 2012/055512

(56) Entgegenhaltungen:
- DE-A1-102007 056 877
- US-A- 5 634 722

## Beschreibung

Die Erfindung betrifft einen Führungswagen gemäß dem Oberbegriff von Anspruch 1.

Aus der DE 10 2007 056 877 A1 ist ein Führungswagen bekannt. Gemäß der Fig. 2 der DE 10 2007 056 877 A 1 ist der Führungswagen 13 zur Verwendung mit einer sich in eine Längsrichtung 111 erstreckenden Führungsschiene 11 vorgesehen. Der Führungswagen umfasst einen Tragkörper 14, der über insgesamt vier Reihen von endlos umlaufenden, rollenförmigen Wälzkörpern 453 - 456 an der Führungsschiene in Längsrichtung beweglich geführt ist.

Gemäß der Fig. 1 der DE 10 2007 056 877 A 1 ist an den beiden in Längsrichtung weisenden Stirnflächen des Tragkörpers je eine Umlenkbaugruppe 21 angebracht, in der gebogene Umlenkkanäle für die Wälzkörper angeordnet sind. An der dem Tragkörper zugewandten Seite der Umlenkplatte 25 ist ein Schmierkanal angebracht, dessen Querschnittsform in den Fig. 12a und 12b der DE 10 2007 056 877 A1 genauer dargestellt ist. Über den Schmierkanal 270 wird Schmiermittel in Form von Schmieröl oder Schmierfett von einem Schmieranschluss zu den Wälzkörpern gefördert. Der Schmierkanal ist im Querschnitt betrachtet U-förmig ausgebildet, wobei er durch die Stirnfläche des Tragkörpers abgedeckt wird. Seitlich ist er durch zwei Dichtfortsätze 271 begrenzt. Die Dichtfortsätze sind biegsam ausgeführt, so dass sie sich bei der Montage der Umlenkbaugruppe an den Tragkörper verbiegen. Die entsprechenden Dichtkanten 275 liegen dann unter Vorspannung an der Stirnseite des Tragkörpers an, so dass der Schmierkanal abgedichtet ist.

Der Schmierkanal der DE 10 2007 056 877 A 1 ist so ausgeführt, dass er wahlweise für die Schmierung mit Schmieröl und Schmierfett geeignet ist. Es hat sich jedoch gezeigt, dass der Schmierkanal bei der Schmierung mit Schmierfett nicht unter allen Bedingungen dicht ist. Kritisch ist es hierbei insbesondere, wenn zähes Schmierfett impulsartig dem Schmierkanal zugeführt wird. Dabei steigt der Schmiermitteldruck in den Schmierkanälen sehr stark an. Der Anpressdruck der Dichtfortsätze an die Stirnfläche des Tragkörpers reicht dann nicht mehr aus, um das Schmierfett im Schmierkanal zu halten. Es tritt vielmehr zwischen der Umlenkplatte und dem Tragkörper aus dem Führungswagen heraus. Dabei lässt sich nicht vorhersehen, an welcher Stelle es austritt. Hierbei ist zu bedenken, dass Schmierfett, das zwischen der Führungsschiene und dem Führungswagen austritt, von den Enddichtungen des Führungswagens in diesem gehalten wird, so dass es den Führungswagen nicht verlassen kann. Schmierfett, welches an anderer Stelle austritt, kann angrenzende Maschinenteile in unerwünschter Weise verschmutzen.

Die Aufgabe der Erfindung besteht darin zu gewährleisten, dass aus dem Schmierkanal austretendes Schmierfett den Führungswagen an einer vorhersehbaren Stelle verlässt, an der es nicht stört.

Gemäß dem selbständigen Anspruch wird diese Aufgabe dadurch gelöst, dass die Umlenkbaugruppe wenigstens einen Bypasskanal in Form einer Vertiefung aufweist, der von der Stirnseite des Tragkörpers abgedeckt wird, wobei die Vertiefung einen Seitenrand aufweist, der durch wenigstens eine erste und wenigstens eine zweite Öffnung unterbrochen ist, wobei die erste Öffnung so benachbart zum Dichtfortsatz angeordnet ist, dass Schmiermittel, welches am Dichtfortsatz vorbei leckt, in den Bypasskanal gelangt, wobei die zweite Öffnung an der Außenoberfläche des Führungswagens angeordnet ist. Damit kann das Schmierfett, das am Dichtfortsatz vorbei leckt, über die erste Öffnung in den Bypasskanal einströmen und durch den Bypasskanal zur zweiten Öffnung an der Außenoberfläche des Führungswagens strömen. Damit ist gewährleistet, dass das überschüssige Schmierfett immer an der zweiten Öffnung austritt. Diese kann problemlos an einer Stelle angeordnet werden, an der der Austritt des Schmierfettes nicht stört.

Weiter ist darauf hinzuweisen, dass die Dichtfunktion des Dichtfortsatzes durch den Bypasskanal nicht gestört werden darf. Aus diesem Grund wurde am Seitenrand der Vertiefung nur eine vergleichsweise kleine erste Öffnung vorgesehen. Die genannte Dichtfunktion ist damit nur im Bereich der ersten Öffnung minimal gestört.

In den abhängigen Ansprüchen sind vorteilhafte Weiterbildungen und Verbesserungen der Erfindung angegeben.

Entlang der gesamten Länge des Dichtfortsatzes kann unmittelbar benachbart und parallel zu diesem ein im Querschnitt betrachtet U-förmiger Dichtkanal verlaufen, wobei die erste Öffnung des Bypasskanals in den Dichtkanal einmündet. Damit ist es unerheblich, an welcher Stelle des Dichtfortsatzes das Schmierfett aus dem Schmierkanal heraustritt. Es kann immer über den Dichtkanal und die erste Öffnung in den Bypasskanal gelangen.

Der Dichtfortsatz kann den Schmierkanal endlos umgeben. Bei dieser Ausführungsform umgibt damit auch der Dichtkanal den Schmierkanal endlos. Damit reicht grundsätzlich eine einzige erste Öffnung aus, um überschüssiges Schmierfett abzuführen. Wenn man den Dichtfortsatz nicht endlos ausführt, ist für jeden Abschnitt des Dichtfortsatzes wenigstens eine erste Öffnung erforderlich. Hierbei kann es vorkommen, dass an der Umlenkbaugruppe nicht genügend Raum vorhanden ist, um den Bypasskanal von den ersten Öffnungen zu der gewünschten zweiten Öffnung zu führen.

Die Vertiefung kann ein im Querschnitt betrachtet U-förmiger Kanal sein, wobei die erste und zweite Öffnung die Enden des genannten Kanals sind. Die erfindungsgemäße Vertiefung mindert die Fläche, mit der die Umlenkbaugruppe an der Stirnfläche des Tragkörpers anliegt. Mit der vorgeschlagenen Ausführungsform wird die Oberfläche der Vertiefung minimiert, so dass die Umlenkbaugruppe mit einer genügend großen Fläche an der Stirnfläche des Tragkörpers anliegt. Falls der erfindungsgemäße Schmierkanal in einer gesonderten Umlenkplatte angeordnet ist, wird hierdurch eine Durchbiegung dieser Umlenkplatte vermieden, die wiederum zu einem verschlechterten Wälzkörperablauf oder zu Undichtigkeiten an anderen Stellen führen könnte.

Die zweite Öffnung kann gegenüberliegend zur Führungsschiene angeordnet sein, wobei an den beiden in Längsrichtung weisenden Enden des Führungswagens je eine Enddichtung vorgesehen ist, deren Dichtlippe zur dichtenden Anlage an der Führungsschiene ausgebildet ist. Durch die Enddichtung wird das aus der zweiten Öffnung austretende Schmierfett in dem Führungswagen gehalten, so dass andere Maschinenteile nicht verschmutzen können. Führungswägen sind üblicherweise mit einer derartigen Enddichtung ausgestattet, die die Führungswagen gegen Eintritt von Fremdkörpern und Austritt von Schmierstoff abdichten soll. Durch die Enddichtung wird zwischen der Führungsschiene und dem Führungswagen ein abgeschlossener Hohlraum geschaffen, in den das Schmierfett über die zweite Öffnung gelangt. Diesen Hohlraum kann das Schmierfett nur über einen Weg verlassen, der an den Wälzkörpern vorbei führt. Damit ist das überschüssige Schmierfett nicht verloren, sondern es wird immer noch zur Schmierung der Wälzkörper genutzt. Die Schmierwirkung tritt jedoch erst erhebliche Zeit nach dem Schmiermittelzuführvorgang ein.

Der Führungswagen kann U-förmig, mit einer Basis und zwei U-Schenkeln ausgebildet sein, wobei er die Führungsschiene mit den U-Schenkeln umgreift, wobei die zweite Öffnung im Bereich der Basis angeordnet ist. Bei dieser Ausführungsform wird das vorstehend erläuterte Prinzip auf die übliche Bauform eines Führungswagens übertragen.

Es können mehrere gesonderte Bypasskanäle vorgesehen sein. Durch die Verwendung mehrerer Bypasskanäle können größere Schmierfettmengen abgeführt werden. Darüber hinaus können die ersten Öffnungen gleichmäßig verteilt entlang des Schmierfortsatzes angeordnet werden.

Die Breite der ersten und der zweiten Öffnung kann zwischen 0,5- und 2-mal der Tiefe des Bypasskanals betragen, wobei die Tiefe des Bypasskanals vorzugsweise konstant ist. Bei diesen Abmessungen ist gewährleistet, dass die Dichtwirkung des zur ersten Öffnung benachbarten Dichtfortsatzes nicht wesentlich gestört ist. Weiter ist mit diesen Abmessungen sichergestellt, dass der Fließwiderstand des Bypasskanals in jedem Falle kleiner als der Austrittswiderstand am Dichtfortsatz ist. Damit ist sichergestellt, dass das gesamte austretende Schmierfett über den Bypasskanal abgeführt werden kann. Die zweite Öffnung besitzt vorzugsweise im Wesentlichen die gleiche Größe wie die erste Öffnung, so dass sich an beiden Stellen der gleiche Fließwiderstand für das Schmierfett ergibt.

Die Erfindung wird im Folgenden anhand der beigefügten Zeichnungen näher erläutert. Es stellt dar:
- Fig. 1: einen Querschnitt eines Linearwälzlagers mit einem erfindungsgemäßen Führungswagen;
- Fig. 2: eine Explosionsansicht des Führungswagens;
- Fig. 3: eine perspektivische Ansicht der Vorderseite der Umlenkplatte des Führungswagens;
- Fig. 4: eine perspektivische Ansicht der Rückseite der ersten Ausführungsform der Umlenkplatte;
- Fig. 5: eine perspektivische Ansicht der Rückseite der zweiten Ausführungsform der Umlenkplatte;
- Fig. 6: eine perspektivische Ansicht der Rückseite der dritten Ausführungsform der Umlenkplatte; und
- Fig. 7: einen Querschnitt des Schmierkanals.

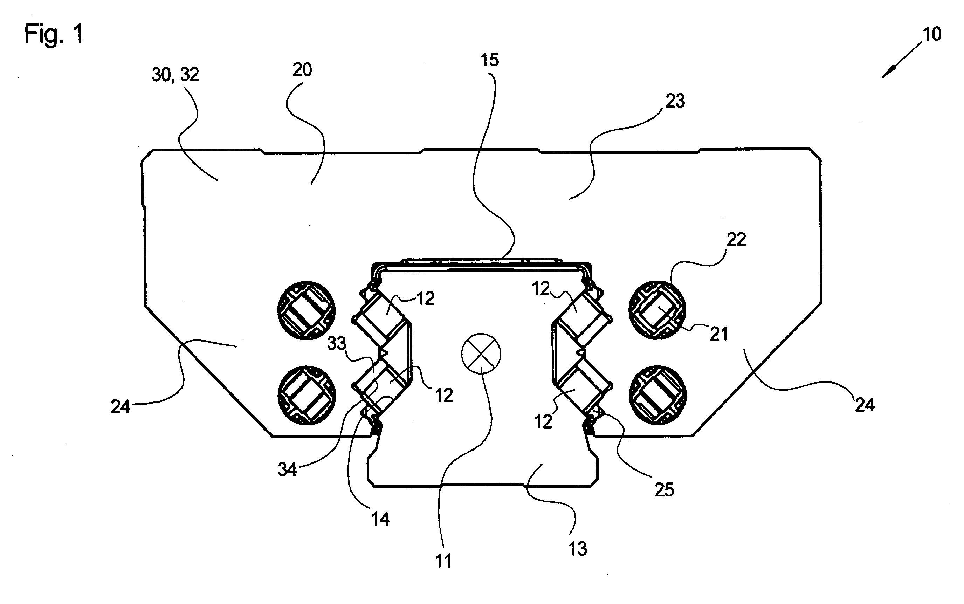

Fig. 1 zeigt einen Querschnitt eines Linearwälzlagers 10 mit einem erfindungsgemäßen Führungswagen 20. Der Führungswagen 20 ist auf einer Führungsschiene 13 in einer Längsrichtung 11 beweglich geführt, wobei die Längsrichtung 11 senkrecht zur Zeichenebene von Fig. 1 ausgerichtet ist. Die Führungsschiene 13 besitzt über ihre gesamte Längserstreckung eine konstante Querschnittsform, wobei sie erheblich länger als der Führungswagen 20 ist. Die Führungsschiene 13 besteht aus Wälzlagerstahl und ist wenigstens im Bereich ihrer Laufbahnen 14 gehärtet. Insgesamt sind vier ebene Laufbahnen 14 vorgesehen, die jeweils unter 90° zueinander geneigt angeordnet sind.

Der Führungswagen 20 umfasst einen Tragkörper 30, der U-förmig mit einer Basis 23 und zwei U-Schenkeln 24 ausgeführt ist, wobei er die Führungsschiene 13 umgreift. Der Tragkörper 30 besteht aus einem einstückigen Grundkörper 32 aus ungehärtetem Stahl und vier gesonderten, plattenartigen Laufbahneinlagen 33 aus gehärtetem Wälzlagerstahl, die mit dem Grundkörper 32 verklebt sind. An den Laufbahneinlagen 33 sind Laufbahnen 34 für rollenförmige Wälzkörper 12 vorgesehen, die parallel zu den zugeordneten Laufbahnen 14 an der Führungsschiene 13 angeordnet sind, so dass die Wälzkörper 12 zwischen einander zugeordneten Laufbahnen 14; 34 abwälzen können. Selbstverständlich kann die vorliegende Erfindung auch bei einem bekannten einstückigen Tragkörper zum Einsatz kommen. Ebenso ist die Erfindung mit einer U-förmigen Führungsschiene und einem blockartigen Tragkörper verwendbar. Bei den Wälzkörpern kann es sich auch um Kugeln handeln.

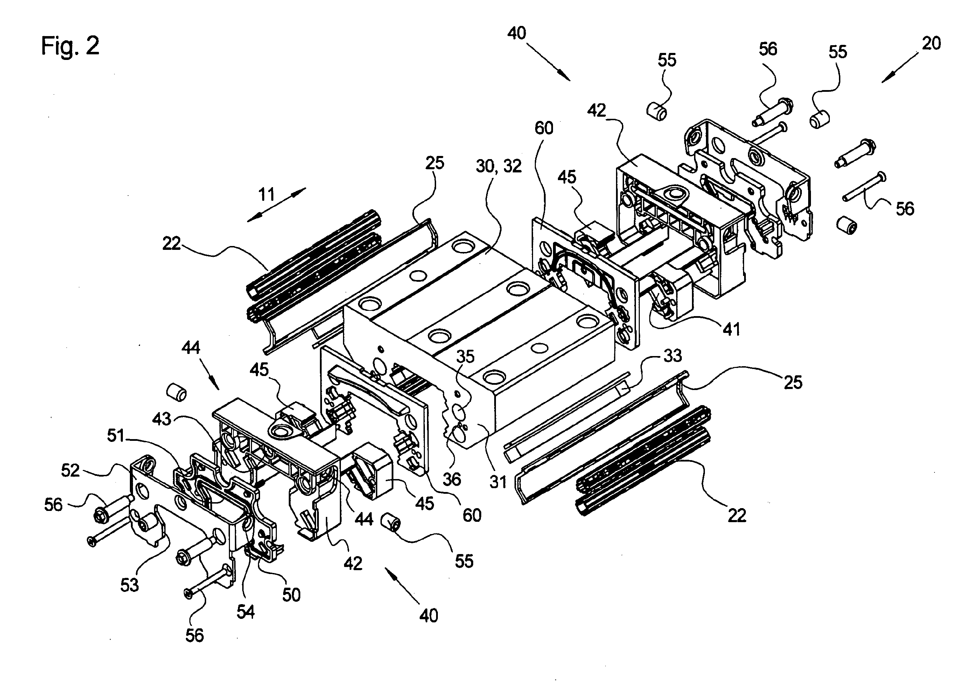

Jeder der vier tragenden Wälzkörperreihen 12 ist ein Rücklaufkanal 21 zugeordnet, der in einem gesonderten Rücklaufrohr 22 aus Kunststoff ausgebildet ist, welches in eine kreisrunde, in Längsrichtung verlaufende Rücklaufbohrung (Nr. 35; Fig. 2) im Grundkörper 32 eingebaut ist. Der Rücklaufkanal 21 ist über zwei gebogene Umlenkkanäle mit einer zugeordneten Laufbahn am Tragkörper verbunden, wobei die Umlenkkanäle in den mit Bezug auf Fig. 2 erläuterten Umlenkbaugruppen angeordnet sind.

Fig. 2 zeigt eine Explosionsansicht des erfindungsgemäßen Führungswagens 20. Der Tragkörper 30 besitzt zwei gegenüberliegende, in Längsrichtung 11 weisende Stirnflächen 31. An diesen ist je eine Umlenkbaugruppe 40 angebracht, in der die gebogenen Umlenkkanäle 41 für die Wälzkörper vorgesehen sind. Die beiden Umlenkbaugruppen 40 sind jeweils identisch ausgeführt, wobei die gebogenen Umlenkkanäle 41 in einer Umlenkbaugruppe 40 jeweils von einer Umlenkplatte 60, einer Umlenkkappe 42 und zwei Umlenkeinsätzen 45 begrenzt werden.

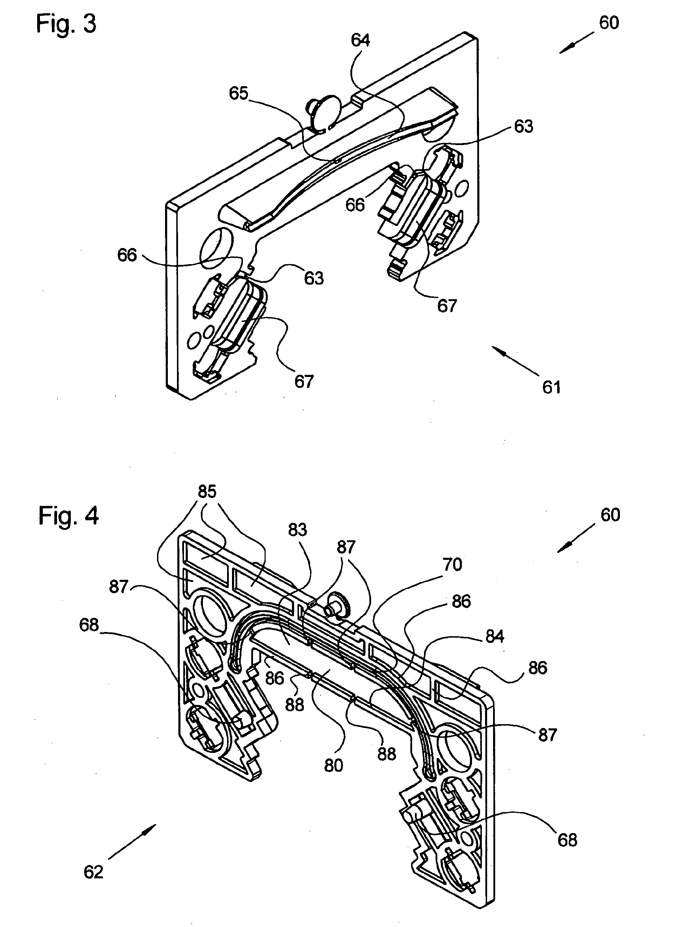

An der Umlenkplatte 60 sind zwei innere Begrenzungsflächen (Nr. 67; Fig. 3) für je einen inneren gebogenen Umlenkkanal vorgesehen. Am Umlenkeinsatz 45 ist die äußere Begrenzungsfläche für den inneren Umlenkanal und die innere Begrenzungsfläche des äußeren Umlenkkanals vorgesehen. Die äußere Begrenzungsfläche des äußeren Umlenkkanals ist größtenteils an der Umlenkkappe 42 vorgesehen, in der der Umlenkeinsatz 45 versenkt aufgenommen ist. Der Umlenkeinsatz 45 wird damit von der Umlenkkappe 42 und der Umlenkplatte 60 vollständig umschlossen.

Die Umlenkkappe 42 und der Umlenkeinsatz 45 sind aus Polyamid im Spritzgussverfahren hergestellt, während die Umlenkplatte 60 aus dem gummiartigen Werkstoff TEEE (Handelsname Hytrel) spritzgegossen ist. Die Umlenkplatte 60, die insgesamt plattenartig ausgeführt ist, besitzt die gleiche Außenkontur wie die wannenartige Umlenkkappe 42 und ist unter anderem als Dichtung gegen Schmiermittelaustritt zwischen der Umlenkkappe 42 und dem Tragkörper 30 vorgesehen.

Das Schmiermittel in Form von Schmierfett oder Schmieröl wird wahlweise über den vorderen 43 oder einen der seitlichen Schmieranschlüsse 44 an der Umlenkkappe 42 zugeführt, wobei die nicht benötigten Schmieranschlüsse mit einem Gewindestift 55 verschlossen sind. Die Gewindestifte 55 werden in ein Gewinde 54 an einem Abstreifblech 52 eingeschraubt. Das Abstreifblech 52 aus nichtrostendem Stahl ist fest mit der Umlenkkappe 42 verbunden und besitzt eine Abstreifkontur 53, die mit geringem Abstand parallel zur Querschnittsform der Führungsschiene ausgebildet ist. Zwischen dem Abstreifblech 52 und der Umlenkkappe 42 ist eine Enddichtung 50 aus TEEE vorgesehen, deren Dichtlippen 51 die Führungsschiene gleitend berühren.

Die zwei seitlichen Schmieranschlüsse 44 einer Umlenkbaugruppe 40 sind über dritte Schmierkanäle (Nr. 64; Fig. 3), die von der Umlenkkappe 42 und der Umlenkplatte 60 begrenzt werden, mit einer einzigen Übergabebohrung (Nr. 65; Fig. 3) in der Umlenkkappe 42 verbunden, durch die das gesamte Schmiermittel fließen muss, um zu den Wälzkörpern zu gelangen. Der vordere Schmieranschluss 43 steht der Übergabebohrung unmittelbar gegenüber.

Jede Umlenkbaugruppe 40 ist über insgesamt vier Schraubbolzen 56 mit dem Tragkörper 30 verschraubt. Auf beiden Seiten der Führungsschiene ist je ein gesonderter Dichtrahmen 25 zwischen den Umlenkkappen 42 befestigt. An dem Dichtrahmen 24 ist eine Längsdichtung vorgesehen, welche die Führungsschiene gleitend berührt. Gleichzeitig werden die Wälzkörper durch den Dichtrahmen gegen Herausfallen aus dem Führungswagen 20 gesichert, wenn sich letztgenannter nicht auf der Führungsschiene befindet.

Fig. 3 zeigt die Umlenkplatte 60 von der Vorderseite 61, welche vom Tragkörper abgewandt ist. Im Bereich der U-Schenkel ist je eine innere Begrenzungsfläche 67 für einen inneren gebogenen Umlenkkanal angeordnet. Etwas oberhalb sind zwei zweite Schmierkanäle 63 vorgesehen, die von einem Ventil 66 zu zwei Reihen von endlos umlaufenden Wälzkörpern führen. Über das Ventil 66 stehen der erste (Nr. 70; Fig. 4 - Fig. 6) und der zweite Schmierkanal 63 in Schmiermittelübertragungsverbindung. Das Ventil 66 ist dabei nur offen, wenn dem Führungswagen Schmiermittel unter Druck zugeführt wird. Im Übrigen ist das Ventil 66 geschlossen.

Weiter ist der dritte Schmierkanal 64 zu erkennen, der von den seitlichen Schmieranschlüssen (Nr. 44; Fig. 2) zu der zentralen Übergabebohrung 65 führt, welche die Umlenkplatte 60 durchsetzt. Der dritte Schmierkanal 64 ist an der Umlenkplatte im Querschnitt U-förmig ausgebildet, wobei er von der Umlenkkappe abgedeckt wird.

Im Folgenden werden drei verschiedene Ausführungsformen der Rückseite 62 der Umlenkplatte 60 beschrieben. Die gegenüberliegende Vorderseite 61 ist bei allen drei Ausführungsformen der Umlenkplatte 60 wie vorstehend beschrieben ausgeführt.

Fig. 4 zeigt die erste Ausführungsform der Umlenkplatte 60 von der Rückseite 62, die dem Tragkörper zugewandt ist. Die Umlenkplatte 60 ist mit einer Vielzahl von Vertiefungen 83; 85 ausgestattet, die durch Stege 86 voneinander abgegrenzt sind. Die Stirnflächen der Stege liegen alle in einer Ebene, wobei sie an der ebenen Stirnfläche des Tragkörpers anliegen, so dass die verschiedenen Vertiefungen 83, 85 jeweils einen abgeschlossenen Hohlraum definieren. Mit den Vertiefungen 83; 85 soll erreicht werden, dass die Umlenkplatte 60 überall eine im Wesentlichen konstante Wanddicke aufweist, so dass sie sich beim Erkalten nach dem Spritzgussvorgang nicht verzieht.

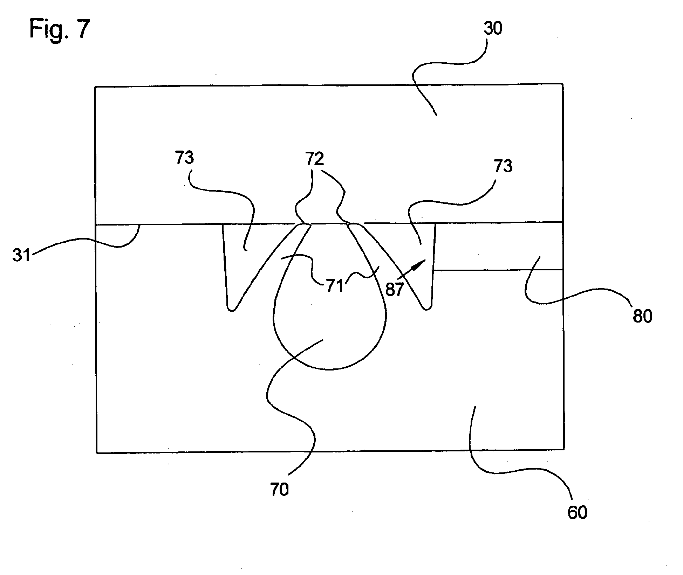

Die Bypassvertiefung 83, welche zwischen der Führungsschiene und dem ersten Schmierkanal 70 angeordnet ist, ist mit vier ersten Öffnungen 87 ausgestattet, welche den Dichtkanal (Nr. 73; Fig. 7) mit der genannten Vertiefung verbinden. Zur Ausgestaltung des Dichtkanals wird auf die Ausführungen zu Fig. 7 verwiesen. Bei den vier ersten Öffnungen 87 handelt es sich um Ausnehmungen in den Stegen 86, welche die Bypassvertiefung 83 begrenzen. Die Tiefe der genannten Ausnehmungen ist gleich der konstanten Tiefe der Bypassvertiefung 83 ausgeführt.

Der erste Schmierkanal 70 wird von einem Dichtfortsatz begrenzt, der ihn endlos umgibt. Letztgenanntes trifft auch auf den Dichtkanal zu, der neben dem Dichtfortsatz angeordnet ist. Somit kann Schmiermittel, welches an dem Dichtfortsatz vorbei leckt, über den Dichtkanal und die ersten Öffnungen 87 in die Bypassvertiefung 83 strömen. Von dort kann es über die beiden zweiten Öffnungen 88 in den Freiraum (Nr. 15; Fig. 1) zwischen Führungsschiene und Führungswagen gelangen. Die Enddichtungen (Nr. 50; Fig. 2) verhindern, dass dieses Schmiermittel den Führungswagen verlassen kann. Die zweiten Öffnungen 88 sind identisch zu den ersten Öffnungen 87 ausgebildet, wobei sie im Bereich der Basis des Führungswagens angeordnet sind.

Hinzuweisen ist noch auf die Ausrichtzapfen 68, mit denen die Umlenkplatte 60 in eine angepasste Ausrichtbohrung (Nr. 36; Fig. 2) am Tragkörper eingreift, so dass die Umlenkplatte 60 gegenüber dem Tragkörper insbesondere im Bereich der Wälzkörperlaufbahnen ausgerichtet ist.

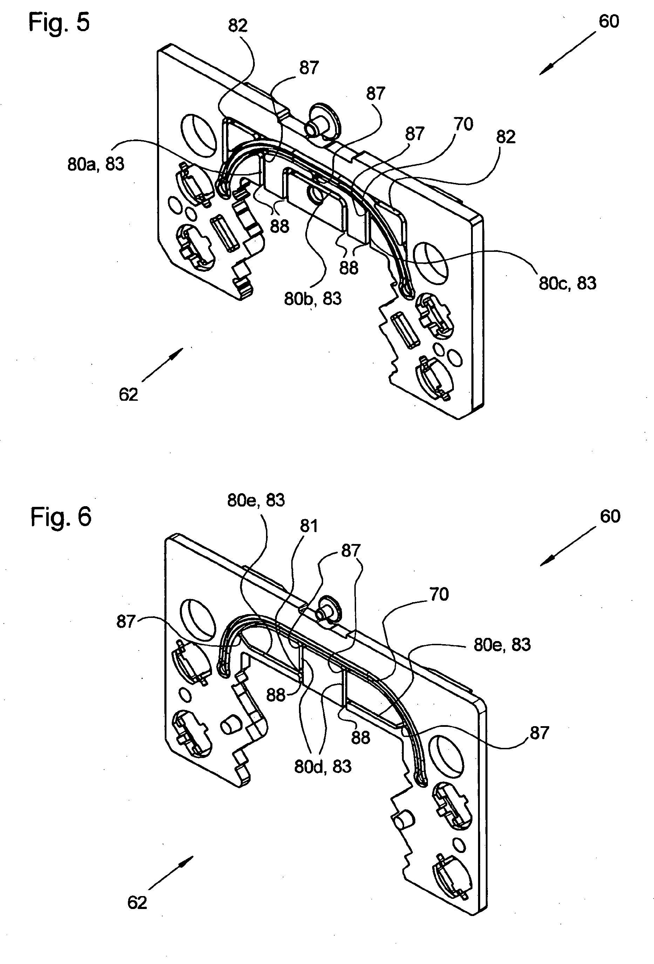

Fig. 5 zeigt die zweite Ausführungsform der Umlenkplatte 60 von der Rückseite 62, die dem Tragkörper zugewandt ist. Gegenüber der ersten Ausführungsform wurde hier auf die herstellungsbedingten Vertiefungen verzichtet, so dass die Umlenkplatte 60 im Wesentlichen vollflächig an der zugeordneten Stirnfläche des Tragkörpers anliegt. Die Bypasskanäle 80a; 80b; 80c wurden deshalb entlang ihrer gesamten Länge mit einer konstanten im Wesentlichen rechteckigen Querschnittsform ausgeführt. Der Bypasskanal mit konstanter Querschnittsform bildet eine Vertiefung im Sinne des Hauptanspruchs. Insgesamt sind drei gesonderte Bypasskanäle 80a; 80b; 80c vorgesehen. Die Bypasskanäle 80a; 80c verlaufen in gerader Linie von dem ersten Schmierkanal 70 zur Außenoberfläche des Führungswagens im Bereich der Basis. Der Bypasskanal 80b verzweigt sich U-förmig, wobei die erste Öffnung 87 im Bereich der Basis der U-Form einmündet. Die zweiten Öffnungen 88 der Bypasskanäle 80a; 80b; 80c sind in Bereich der Basis des Führungswagens angeordnet.

Die beiden Entlastungskanäle 82, welche an der von der Führungsschiene abgewandten Seite des ersten Schmierkanals 70 angeordnet sind, verbinden zwei beabstandete Stellen des Dichtkanals miteinander. Damit muss nicht das gesamte Schmiermittel, welches auf dieser Seite an den Dichtlippen vorbei leckt durch die Dichtkanäle zu den Bypasskanälen 80a; 80b; 80c an der gegenüberliegenden Seite des ersten Schmierkanals 70 fließen. Ein Teil kann vielmehr entlang der Entlastungskanäle 82 fließen, so dass im Dichtkanal kein übermäßig großer Schmiermitteldruck entsteht.

Fig. 6 zeigt die dritte Ausführungsform der Umlenkplatte 60 von der Rückseite 62, die dem Tragkörper zugewandt ist. Gegenüber der zweiten Ausführungsform wurde auf die Entlastungskanäle (Nr. 82; Fig. 5) verzichtet. Der Verlauf der Bypasskanäle 80d; 80e wurde dahingehend geändert, dass nunmehr vier erste Öffnungen 87 und nur zwei zweite Öffnungen 88 vorhanden sind. Der Bypasskanal 80e mündet dementsprechend an der Verbindungsstelle 81 in den Bypasskanal 80d ein. Der dritten Ausführungsform liegt die Überlegung zugrunde, dass an möglichst vielen Stellen des Dichtkanals erste Öffnungen 87 vorhanden sein sollen, damit der Schmiermitteldruck im Dichtkanal nicht übermäßig ansteigt. Die Anzahl der zweiten Öffnungen 88 kann demgegenüber kleiner ausfallen, da ein übermäßig großer Schmiermitteldruck problemlos über die Querschnittsfläche der Bypasskanäle 80d; 80e ausgeglichen werden kann.

Fig. 7 zeigt den ersten Schmierkanal 70 im Querschnitt. Der erste Schmierkanal 70 wird zu beiden Seiten von je einem biegsamen Dichtfortsatz 71 begrenzt. Die Dichtkante 72 des Dichtfortsatzes liegt unter Vorspannung an der Stirnfläche 31 des Tragkörpers 30 an, so dass der erste Schmierkanal 70 in den weitaus meisten Einsatzfällen dicht verschlossen ist. Es hat sich jedoch gezeigt, dass Schmierfett, welches impulsartig zugeführt wird, an der Dichtkante 72 vorbei in den Dichtkanal 73 neben dem Dichtfortsatz lecken kann. Derartiges Schmierfett kann durch den erfindungsgemäßen Bypasskanal 80, dessen erste Öffnung 87 in den Dichtkanal 80 einmündet, an eine Stelle abgeführt werden, an der es nicht stört.

### Bezugszeichenliste

- 10: Linearwälzlager
- 11: Längsrichtung
- 12: Wälzkörper
- 13: Führungsschiene
- 14: Laufbahn der Führungsschiene
- 15: Freiraum

- 20: Führungswagen
- 21: Rücklaufkanal
- 22: Rücklaufrohr
- 23: Basis
- 24: U-Schenkel
- 25: Dichtrahmen

- 30: Tragkörper
- 31: Stirnfläche
- 32: Grundkörper
- 33: Laufbahneinlagen
- 34: Laufbahn des Führungswagens
- 35: Rücklaufbohrung
- 36: Ausrichtbohrung

- 40: Umlenkbaugruppe
- 41: gebogener Umlenkkanal
- 42: Umlenkkappe
- 43: vorderer Schmieranschluss
- 44: seitlicher Schmieranschluss
- 45: Umlenkeinsatz

- 50: Enddichtung
- 51: Dichtlippe
- 52: Abstreifblech
- 53: Abstreifkontur
- 54: Gewinde
- 55: Gewindestift
- 56: Schraubbolzen

- 60: Umlenkplatte
- 61: Vorderseite
- 62: Rückseite
- 63: zweiter Schmierkanal
- 64: dritter Schmierkanal
- 65: Übergabebohrung
- 66: Ventil
- 67: innere Begrenzungsfläche des inneren Umlenkkanals
- 68: Ausrichtzapfen

- 70: erster Schmierkanal
- 71: Dichtfortsatz
- 72: Dichtkante
- 73: Dichtkanal

- 80a - e: Bypasskanal
- 81: Verbindungsstelle
- 82: Entlastungskanal
- 83: (Bypass-)Vertiefung
- 84: Seitenrand der Vertiefung
- 85: herstellungsbedingte Vertiefung
- 86: Steg
- 87: erste Öffnung
- 88: zweite Öffnung

## Patentansprüche

1. Führungswagen (20) zur Verwendung mit einer sich in eine Längsrichtung (11) erstreckenden Führungsschiene (13), wobei der Führungswagen (20) einen Tragkörper (30) umfasst, der über wenigstens eine endlos umlaufende Reihe von Wälzkörpern (12) an der Führungsschiene (13) in Längsrichtung (11) beweglich geführt werden kann, wobei der Tragkörper (30) wenigstens eine in Längsrichtung (11) weisende Stirnfläche (31) aufweist, an der eine Umlenkbaugruppe (40) mit einem gebogenen Umlenkkanal (41) für die Wälzkörper (12) angebracht ist, wobei die Umlenkbaugruppe (40) wenigstens einen im Querschnitt betrachtet U-förmigen Schmierkanal (70) zum Fördern von Schmiermittel aufweist, welcher von der Stirnfläche (31) des Tragkörpers (30) abgedeckt wird, wobei der Schmierkanal (70) seitlich durch einen biegsamen Dichtfortsatz (71) begrenzt wird, der dichtend an der Stirnfläche des Tragkörpers anliegt,
**dadurch gekennzeichnet, dass** die Umlenkbaugruppe (40) wenigstens einen Bypasskanal (80; 80a - 80d) in Form einer Vertiefung (83) aufweist, der von der Stirnseite (31) des Tragkörpers (30) abgedeckt wird, wobei die Vertiefung (83) einen Seitenrand (84) aufweist, der durch wenigstens eine erste und wenigstens eine zweite Öffnung (87; 88) unterbrochen ist, wobei die erste Öffnung (87) so benachbart zum Dichtfortsatz (71) angeordnet ist, dass Schmiermittel, welches am Dichtfortsatz (71) vorbei leckt, in den Bypasskanal (80; 80a - 80d) gelangt, wobei die zweite Öffnung (88) an der Außenoberfläche des Führungswagens (20) angeordnet ist.

2. Führungswagen nach Anspruch 1,
**dadurch gekennzeichnet, dass** entlang der gesamten Länge des Dichtfortsatzes (71) unmittelbar benachbart und parallel zu diesem ein im Querschnitt betrachtet U-förmiger Dichtkanal (73) verläuft, wobei die erste Öffnung (87) des Bypasskanals (80; 80a - 80d) in den Dichtkanal (73) einmündet.

3. Führungswagen nach Anspruch 2,
**dadurch gekennzeichnet, dass** der Dichtfortsatz (71) den Schmierkanal (70) endlos umgibt.

4. Führungswagen nach einem der vorstehenden Ansprüche,
**dadurch gekennzeichnet, dass** die Vertiefung (83) ein im Querschnitt betrachtet U-förmiger Kanal ist, wobei die erste und zweite Öffnung (87; 88) die Enden des genannten Kanals sind.

5. Führungswagen nach einem der vorstehenden Ansprüche,
**dadurch gekennzeichnet, dass** die zweite Öffnung (88) gegenüberliegend zur Führungsschiene (13) angeordnet ist, wobei an den beiden in Längsrichtung (11) weisenden Enden des Führungswagens (20) je eine Enddichtung (50) vorgesehen ist, deren Dichtlippe (51) zur dichtenden Anlage an der Führungsschiene (13) ausgebildet ist.

6. Führungswagen nach Anspruch 5,
**dadurch gekennzeichnet, dass** der Führungswagen (20) U-förmig mit einer Basis (23) und zwei U-Schenkeln (24) ausgebildet ist, wobei er die Führungsschiene (20) mit den U-Schenkeln (24) umgreift, wobei die zweite Öffnung (80) im Bereich der Basis (13) angeordnet ist.

7. Führungswagen nach einem der vorstehenden Ansprüche,
**dadurch gekennzeichnet, dass** mehrere gesonderte Bypasskanäle (80; 80a - 80d) vorgesehen sind.

8. Führungswagen nach einem der vorstehenden Ansprüche,
**dadurch gekennzeichnet, dass** die Breite der ersten und der zweiten Öffnung (87; 88) zwischen 0,5- und 2-mal der Tiefe des Bypasskanals (80; 80a-80d) beträgt, wobei die Tiefe des Bypasskanals (80; 80a - 80d) vorzugsweise konstant ist.

## Claims

1. Guide carriage (20) for use with a guide rail (13) which extends in a longitudinal direction (11), the guide carriage (20) comprising a supporting body (30) which can be guided movably in the longitudinal direction (11) on the guide rail (13) over at least one endlessly circulating row of rolling bodies (12), the supporting body (30) having at least one end face (31) which points in the longitudinal direction (11) and on which a deflection assembly (40) with a curved deflection channel (41) for the rolling bodies (12) is attached, the deflection assembly (40) having at least one lubricating channel (70) for conveying lubricant, which lubricant channel (70) is U-shaped as viewed in cross section and is covered by the end face (31) of the supporting body (30), the lubricant channel (70) being delimited laterally by a flexible sealing projection (71) which bears sealingly against the end face of the supporting body, **characterized in that** the deflection assembly (40) has at least one bypass channel (80; 80a - 80d) in the form of a depression (83), which bypass channel (80; 80a - 80d) is covered by the end side (31) of the supporting body (30), the depression (83) having a side edge (84) which is interrupted by at least one first and at least one second opening (87; 88), the first opening (87) being arranged adjacently with respect to the sealing projection (71) in such a way that lubricant which leaks past the sealing projection (71) passes into the bypass channel (80; 80a - 80d), the second opening (88) being arranged on the outer surface of the guide carriage (20).

2. Guide carriage according to Claim 1, **characterized in that** a sealing channel (73) which is U-shaped as viewed in cross section runs along the entire length of the sealing projection (71) immediately adjacently and parallel with respect to the latter, the first opening (87) of the bypass channel (80; 80a - 80d) opening into the sealing channel (73).

3. Guide carriage according to Claim 2, **characterized in that** the sealing projection (71) surrounds the lubricating channel (70) endlessly.

4. Guide carriage according to one of the preceding claims, **characterized in that** the depression (83) is a channel which is U-shaped as viewed in cross section, the first and second opening (87; 88) being the ends of the said channel.

5. Guide carriage according to one of the preceding claims, **characterized in that** the second opening (88) is arranged so as to lie opposite the guide rail (13), in each case one end seal (50) being provided at the two ends of the guide carriage (20) which point in the longitudinal direction (11), the sealing lip (51) of which end seal (50) is configured for bearing sealingly against the guide rail (13).

6. Guide carriage according to Claim 5, **characterized in that** the guide carriage (20) is of U-shaped configuration with a base (23) and two U-limbs (24), the said guide carriage (20) engaging around the guide rail (20) with the U-limbs (24), the second opening (80) being arranged in the region of the base (13).

7. Guide carriage according to one of the preceding claims, **characterized in that** a plurality of separate bypass channels (80; 80a - 80d) are provided.

8. Guide carriage according to one of the preceding claims, **characterized in that** the width of the first and the second opening (87; 88) is between 0.5 and 2 times the depth of the bypass channel (80; 80a - 80d), the depth of the bypass channel (80; 80a - 80d) preferably being constant.

## Revendications

1. Chariot de guidage (20) destiné à l'utilisation avec un rail de guidage (13) s'étendant dans une direction longitudinale (11), le chariot de guidage (20) comprenant un corps de support (30) qui peut être guidé de manière mobile dans la direction longitudinale (11) par le biais d'au moins une rangée de corps de roulement (12) entraînée en rotation sans fin sur le rail de guidage (13), le corps de support (30) présentant au moins une surface frontale (31) tournée dans la direction longitudinale (11), sur laquelle est monté un module de déflexion (40) avec un canal de déflexion cintré (41) pour les corps de roulement (12), le module de déflexion (40) présentant au moins un canal de lubrification (70) en forme de U en section transversale pour transporter un lubrifiant, lequel canal de lubrification est recouvert par la surface frontale (31) du corps de support (30), le canal de lubrification (70) étant limité latéralement par une saillie d'étanchéité flexible (71) qui s'applique hermétiquement contre la surface frontale du corps de support, **caractérisé en ce que** le module de déflexion (40) présente au moins un canal de dérivation (80 ; 80a-80d) en forme de renfoncement (83) qui est recouvert par le côté frontal (31) du corps de support (30), le renfoncement (83) présentant un bord latéral (84) qui est interrompu par au moins une première et au moins une deuxième ouverture (87 ; 88), la première ouverture (87) étant disposée à proximité de la saillie d'étanchéité (71) de telle sorte que du lubrifiant qui s'échappe devant la saillie d'étanchéité (71) parvienne dans le canal de dérivation (80 ; 80a-80d), la deuxième ouverture (88) étant disposée au niveau de la surface extérieure du chariot de guidage (20).

2. Chariot de guidage selon la revendication 1, **caractérisé en ce qu'**un canal d'étanchéité (73) en forme de U en section transversale s'étend le long de toute la longueur de la saillie d'étanchéité (71) de manière immédiatement adjacente et parallèle à celle-ci, la première ouverture (87) du canal de dérivation (80 ; 80a-80d) débouchant dans le canal d'étanchéité (73).

3. Chariot de guidage selon la revendication 2, **caractérisé en ce que** la saillie d'étanchéité (71) entoure sans fin le canal de lubrification (70).

4. Chariot de guidage selon l'une quelconque des revendications précédentes,
**caractérisé en ce que** le renfoncement (83) est un canal en forme de U en section transversale, la première et la deuxième ouverture (87 ; 88) constituant les extrémités dudit canal.

5. Chariot de guidage selon l'une quelconque des revendications précédentes,
**caractérisé en ce que** la deuxième ouverture (88) est disposée en face du rail de guidage (13), un joint d'étanchéité d'extrémité (50) étant à chaque fois prévu au niveau des deux extrémités du chariot de guidage (20) tournées dans la direction longitudinale (11), dont la lèvre d'étanchéité (51) est réalisée de manière à venir s'appliquer hermétiquement contre le rail de guidage (13).

6. Chariot de guidage selon la revendication 5, **caractérisé en ce que** le chariot de guidage (20) est réalisé en forme de U avec une base (23) et deux branches de U (24), le chariot de guidage venant en prise autour du rail de guidage (20) avec les branches du U (24), la deuxième ouverture (80) étant disposée dans la région de la base (13).

7. Chariot de guidage selon l'une quelconque des revendications précédentes,
**caractérisé en ce que** plusieurs canaux de dérivation séparés (80 ; 80a-80d) sont prévus.

8. Chariot de guidage selon l'une quelconque des revendications précédentes,
**caractérisé en ce que** la largeur de la première et de la deuxième ouverture (87 ; 88) est comprise entre 0,5 et 2 fois la profondeur du canal de dérivation (80 ; 80a-80d), la profondeur du canal de dérivation (80 ; 80a-80d) étant de préférence constante.
